# FASCICULE DE BREVET EUROPEEN

(11) **EP 3 216 122 B1**
(45) Date de publication et mention de la délivrance du brevet: **06.03.2019**
(21) Numéro de dépôt: 15798161.4
(22) Date de dépôt: 29.10.2015
(51) Int. Cl.: H02S 20/32, F24S 30/425, F24S 25/12, F24S 30/00

(54) **SYSTÈME DE SUPPORT SUIVEUR MONO-AXE POUR CAPTEUR SOLAIRE**
EINACHSIGES VERFOLGERSYSTEM FÜR SONNENKOLLEKTOREN
SINGLE-AXIS FOLLOWER SUPPORT SYSTEM FOR A SOLAR COLLECTOR

(30) Priorité: 05.11.2014 FR 1460672
(43) Date de publication de la demande: 13.09.2017
(73) Titulaire: Optimum Tracker, 13590 Meyreuil (FR)
(72) Inventeur: MICHOTTE DE WELLE, Madyan, F-13310 Saint Martin de Crau (FR)
(74) Mandataire: v. Bezold & Partner Patentanwälte - PartG mbB
(86) Numéro de dépôt international: PCT/FR2015/052921
(87) Numéro de publication internationale: WO 2016/071608

(56) Documents cités:
- FR-A1- 3 001 793
- KR-A- 20120 053 178
- US-A1- 2011 253 195
- US-A1- 2013 039 610

## Description

La présente invention se rapporte à un système de support suiveur pour au moins un capteur solaire, notamment du type panneau photovoltaïque.

L'objet de l'invention se situe dans le domaine des systèmes de support suiveur, autrement appelés suiveurs solaires ou « solar tracker », mono-axe, c'est-à-dire du type orientable selon un unique axe de rotation horizontal pour une rotation permettant de suivre le soleil lors de son élévation et de sa descente.

L'invention trouve une application dans les systèmes de support suiveur mono-axe supportant un ou plusieurs capteurs solaires, notamment du type :
- panneau solaire photovoltaïque intégrant des cellules photovoltaïques transformant le rayonnement solaire en énergie électrique ;
- panneau solaire photovoltaïque à concentration intégrant des systèmes optiques de concentration du rayonnement solaire, tels que des lentilles de Fresnel, loupe ou miroir, permettant de faire converger le rayonnement solaire vers des cellules photovoltaïques, comme par exemple des panneaux solaires photovoltaïque à haute concentration, autrement appelés « HCPV » pour « High Concentration PhotoVoltaic », ou des panneaux solaires photovoltaïque à basse concentration, autrement appelés « LCPV » pour « Low Concentration PhotoVoltaic » ;
- panneau solaire transformant le rayonnement solaire en énergie thermique ;
- panneau miroir reflétant le rayonnement solaire vers un récepteur solaire.

L'invention se rapporte plus particulièrement à un système de support suiveur mono-axe comprenant une structure fixe d'ancrage au sol, et une plateforme propre à supporter au moins un capteur solaire et fixée sur au moins une poutre centrale horizontale montée à rotation sur la structure fixe selon un axe de rotation horizontal à l'intérieur d'au moins un palier fixé sur la structure fixe, la plateforme étant ainsi mobile en pivotement selon cet de rotation horizontal.

Il est ainsi connu, notamment des documents DE 10 2006 036 150 et US 2008/0308091, d'employer des paliers du type comprenant un manchon annulaire à l'intérieur duquel est monté pivotante la poutre centrale, ces paliers étant généralement du type palier lisse. De cette manière, l'axe de rotation horizontal est confondu avec l'axe central du manchon annulaire, lui-même confondu avec l'axe central de la poutre centrale. Ainsi, l'axe de rotation horizontal est éloigné de la plateforme d'une distance minimum équivalente sensiblement au rayon externe du manchon cylindrique du palier, contribuant donc à éloigner l'axe de rotation horizontal du centre de gravité de l'ensemble plateforme/capteur(s) solaire(s).

Or, plus l'axe de rotation horizontal est éloigné du centre de gravité de l'ensemble plateforme/capteur(s) solaire(s), et plus les efforts à fournir pour faire tourner cet ensemble plateforme/capteur(s) solaire(s) autour cet axe de rotation horizontal seront élevés.

La présente invention a pour but de proposer un système de support suiveur mono-axe intégrant un ou plusieurs paliers qui permettent de rapprocher l'axe de rotation horizontal du centre de gravité de l'ensemble plateforme/capteur(s) solaire(s), voire même de faire passer cet axe de rotation horizontal par ce centre de gravité.

A cet effet, elle propose un système de support suiveur mono-axe pour au moins un capteur solaire, notamment du type panneau photovoltaïque, ledit système de support comprenant :
- une structure fixe d'ancrage au sol ; et
- une plateforme propre à supporter le au moins un capteur solaire, ladite plateforme étant fixée sur au moins une poutre centrale horizontale montée à rotation sur la structure fixe selon un axe de rotation horizontal à l'intérieur d'au moins un palier fixé sur la structure fixe ;
ledit système de support étant remarquable en ce que le au moins un palier comprend :
- une pièce rotative présentant, d'une part, un logement de réception de la poutre centrale et, d'autre part, un rail de guidage présentant une forme en arc de cercle centré sur ledit axe de rotation horizontal, ledit rail de guidage s'étendant en-dessous dudit logement ; et
- une embase maintenue sur la structure fixe et sur laquelle sont fixés des organes de roulement montés roulant dans le rail de guidage de la pièce rotative.

Ainsi, la position de l'axe de rotation horizontal est déterminée par le rail de guidage, et la position de la plateforme est déterminée par le logement qui supporte la poutre centrale. Ainsi, en jouant sur la position relative du logement vis-à-vis du rail de guidage, et en jouant sur la forme du rail de guidage, on joue sur la position de la plateforme vis-à-vis de cet axe de rotation horizontal, permettant ainsi de maîtriser un rapprochement entre l'axe de rotation horizontal et le centre de gravité de l'ensemble plateforme/capteur(s) solaire(s).

Il est bien clair au sens de l'invention que le rail de guidage présente une forme d'arc de cercle, et non pas de cercle complet. Ce rail de guidage forme ainsi un chemin de roulement générant une course en rotation centré sur l'axe de rotation horizontal pour la pièce rotative, et donc pour la poutre centrale solidaire en rotation de cette pièce rotative, par l'intermédiaire des organes de roulement roulant dans le rail de guidage.

Selon une caractéristique, le logement est formé d'une encoche ouverte sur le haut et fermé par un étrier fixé sur la pièce rotative, cet étrier serrant la poutre centrale dans ladite encoche.

Ainsi, la poutre centrale vient se loger dans le logement de la pièce rotative, avant d'être serrée avec l'étrier de fermeture, permettant ainsi de rapprocher la plateforme du palier.

Selon une autre caractéristique, l'étrier présente une surface d'appui supérieure sur laquelle repose la plateforme.

Ainsi, la plateforme n'est écartée de la poutre centrale que de l'épaisseur de l'étrier, assurant ainsi une grande proximité entre la plateforme et le palier.

Dans une réalisation particulière, la pièce rotative présente deux bords supérieurs plats disposés de part et d'autre de l'encoche, lesdits bords supérieurs étant sensiblement coplanaires avec la surface d'appui supérieure de l'étrier de sorte que la plateforme repose à la fois sur cette surface d'appui supérieure et sur lesdits bords supérieurs.

Ainsi, la plateforme est en appui stable sur à la fois l'étrier et la pièce rotative.

Dans un mode de réalisation particulier, le rail de guidage est constitué d'une fente traversante dans la pièce rotative, les organes de roulement étant montés roulant dans ladite fente.

Avantageusement, l'embase comprend deux éléments latéraux disposés de part et d'autre de la fente prévue dans la pièce rotative, les organes de roulement étant fixés sur lesdits éléments latéraux et intercalés entre ces éléments latéraux qui les maintiennent en place dans ladite fente.

Ainsi, les organes de roulement sont en cage ou enserrés entre les deux éléments latéraux, garantissant une excellente stabilité mécanique du montage des organes de roulement à l'intérieur de la fente arquée.

Selon une possibilité de l'invention, la pièce rotative est composée d'au moins une platine mince dans laquelle sont prévus le logement et le rail de guidage.

Selon une autre possibilité de l'invention, le rail de guidage présente une forme en arc de cercle de secteur angulaire inférieur ou égal à 220°, de préférence entre 90° et 180° et encore de préférence entre 120° et 170°.

Conformément à une autre caractéristique avantageuse de l'invention, la poutre centrale s'étend selon un axe central, et où le logement et le rail de guidage sont conformés pour que l'axe de rotation horizontal soit situé au-dessus de l'axe central de ladite poutre centrale.

Ainsi, l'axe de rotation horizontal est rapproché de la plateforme et donc du centre de gravité de l'ensemble plateforme/capteur(s) solaire(s).

Avantageusement, le logement et le rail de guidage sont conformés pour que l'axe de rotation horizontal soit situé au-dessus de la poutre centrale, au niveau de la plateforme.

Ainsi, l'axe de rotation horizontal est situé au niveau de la plateforme, donc à proximité voir sur le centre de gravité de l'ensemble plateforme/capteur(s) solaire(s).

Encore avantageusement, les organes de roulement sont du type roulement à billes, roulement à aiguilles ou galet de roulement, qui présentent l'avantage de garantir un pivotement de la pièce rotative quasiment sans frottement vis-à-vis de l'embase fixe.

La présente invention concerne également la caractéristique selon laquelle le rail de guidage présente deux terminaisons opposées, formant des butées d'arrêt pour les organes de roulement.

Dans une réalisation particulière, ces terminaisons sont localisées verticalement en-dessous d'une face supérieure de la poutre centrale dans une configuration à plat où la plateforme est horizontale.

Ainsi, le rail de guidage ne dépasse pas la poutre centrale, permettant ainsi de rapprocher la plateforme de la poutre centrale.

Selon une autre disposition caractéristique, le système de support suiveur comprend en outre un système d'entraînement en rotation de la poutre centrale, ce système d'entraînement étant couplé à un actionneur afin de piloter la mise en rotation de la plateforme selon l'axe de rotation horizontal.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue schématique en perspective de dessous et partiel d'un système de support suiveur conforme à l'invention, avec des panneaux photovoltaïques en place sur la plateforme ;
- la figure 2 est une vue schématique en perspective de dessous et partiel du système de support suiveur de la figure 1, zoomant sur un palier conforme à l'invention et avec des panneaux photovoltaïques en place sur la plateforme ;
- les figures 3 et 4 sont des vues schématiques de face du système de support suiveur de la figure 1, respectivement dans une configuration à plat avec la plateforme horizontale (figure 3) et dans une configuration inclinée avec la plateforme inclinée par rapport à l'horizontale (figure 4), ces figures illustrant chacune un palier duquel a été partiellement dénudé un élément latéral de son embase pour visualiser la position des organes de roulement dans la fente de guidage ;

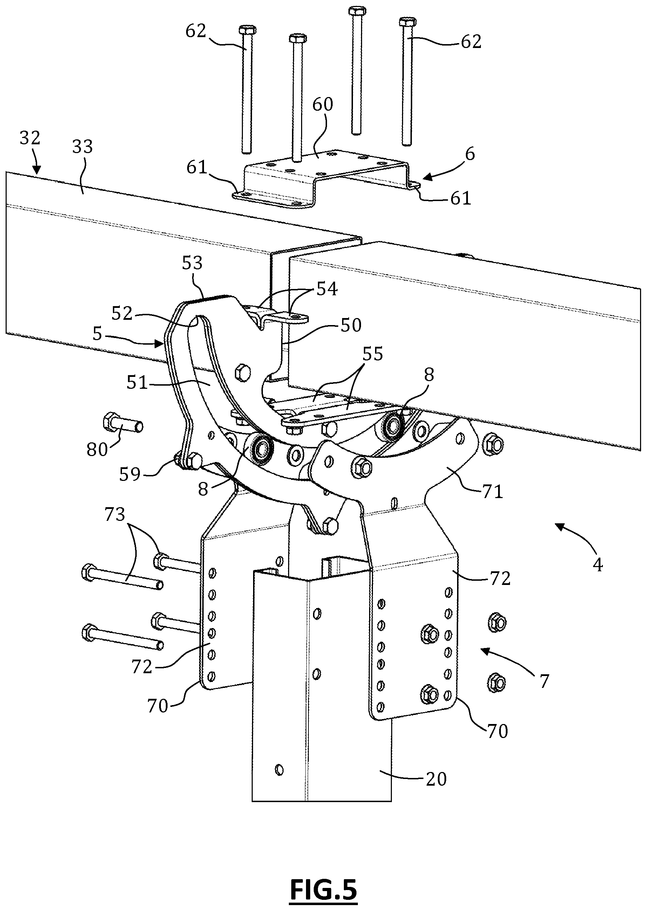

- la figure 5 est une vue schématique en perspective de dessus, partiel et éclatée du système de support suiveur de la figure 1, permettant de visualiser un palier en éclatée ;

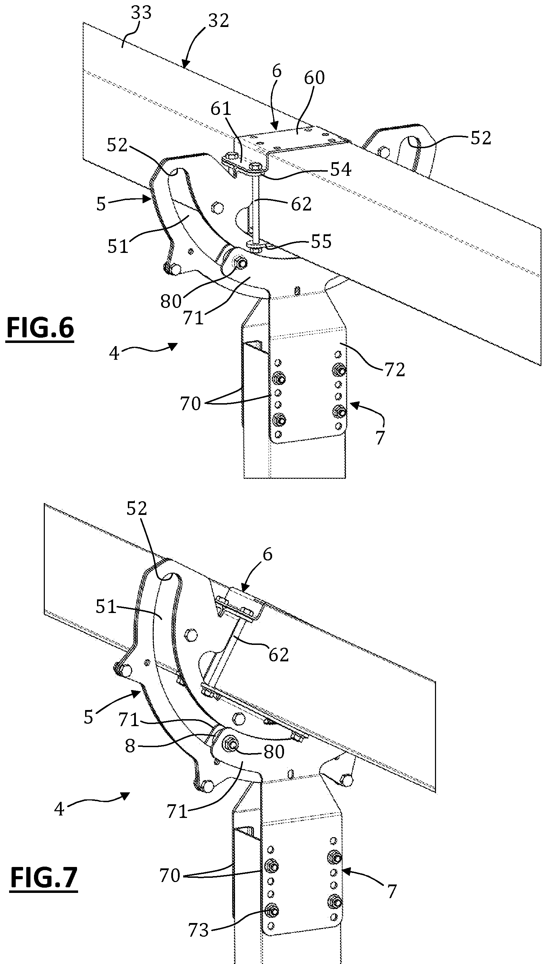

- les figures 6 et 7 sont des vues schématiques en perspective de dessus et partiel du système de support suiveur de la figure 1, respectivement dans une configuration à plat avec la plateforme horizontale (figure 3) et dans une configuration inclinée avec la plateforme inclinée par rapport à l'horizontale (figure 4), où la plateforme et les panneaux photovoltaïques ne sont pas illustrés à des fins de clarté.

En référence aux figures, un système de support suiveur 1 mono-axe conforme à l'invention constitue un système de support suiveur 1 pour une installation solaire IN en supportant un ou plusieurs capteurs solaires 9. Pour la suite de la description, les capteurs solaires 9 sont des panneaux photovoltaïques.

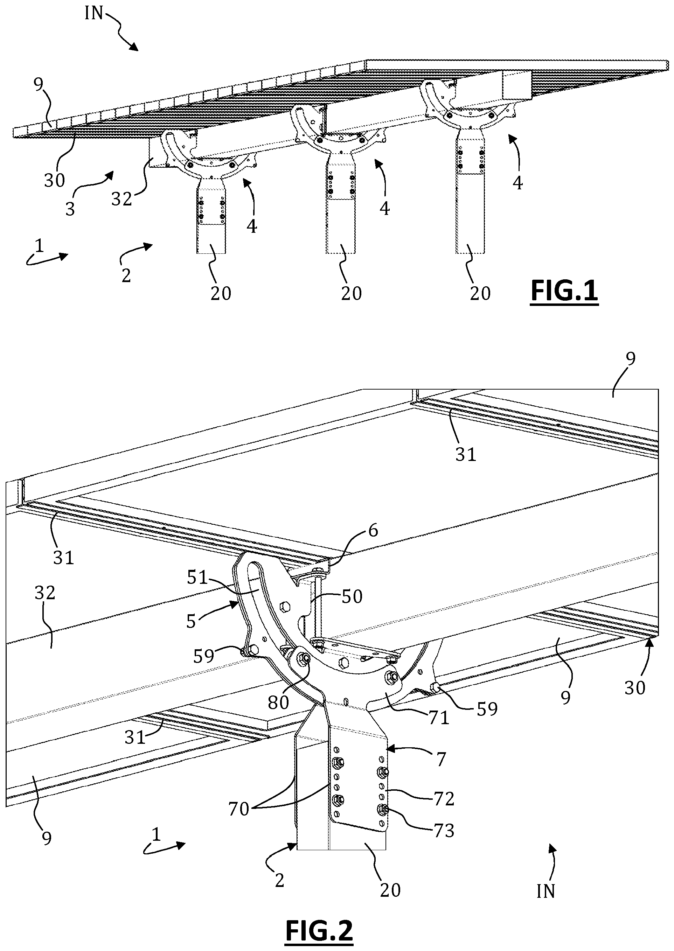

Ce système de support suiveur 1 comprend une structure fixe 2 d'ancrage au sol. En référence à la figure 1, la structure fixe 2 est constituée de plusieurs pylônes 20 ancrés au sol, par exemple par battage, vissage, boulonnage, lestage, ou autre moyen équivalent permettant de fixer et stabiliser au sol la structure fixe 2.

Ce système de support suiveur 1 comprend en outre une structure mobile 3 montée à rotation sur la structure fixe 2 selon un axe de rotation horizontal A, et plus spécifiquement montée à rotation sur les extrémités supérieures des pylônes 20.

La structure mobile 3 comporte une plateforme 30 propre à supporter les panneaux photovoltaïques 9. Cette plateforme 30 est par exemple composée d'un assemblage de poutrelles 31, telles que des cornières ou profilés, qui réceptionnent les panneaux photovoltaïques 9 ; ces panneaux photovoltaïques 9 étant fixés sur ces poutrelles 31, notamment par vissage.

La structure mobile 3 comporte également une poutre centrale 32 horizontale sur laquelle est fixée la plateforme 30. La poutre centrale 32 est montée à rotation sur la structure fixe 2 selon l'axe de rotation horizontal A, et plus spécifiquement est montée à rotation sur les extrémités supérieures des pylônes 20 à l'intérieur de paliers 4 ; ces paliers 4 étant fixés sur les extrémités supérieures des pylônes 20.

La poutre centrale 32 s'étend selon un axe central B horizontal, et se présente sous la forme d'une poutre tubulaire de section transversale carrée dans l'exemple illustré sur les figures, étant bien entendu envisageable que d'autres formes de section transversale pour la poutre centrale 32 sont envisageables, telles que des sections circulaire et rectangulaire.

Les paliers 4 sont tous identiques, et chaque palier 4 comprend principalement une pièce rotative 5 et un étrier 6 solidaires en rotation de la poutre centrale 32, ainsi qu'une embase 7 solidaire de la structure fixe 2 et des organes de roulement 8 du type roulement à bille. Il est également envisageable que tout ou partie des organes de roulement 8 soit du type roulement à aiguilles ou galet de roulement, notamment galet cylindrique.

La pièce rotative 5 est composée d'une platine mince, réalisée sous la forme de deux plaques métalliques plaquées et fixée l'une contre l'autre, par exemple par boulonnage au moyen d'ensembles vis/écrou 59, ou éventuellement par soudage. Il est bien entendu envisageable que la pièce rotative 5 soit composée d'une unique plaque métallique.

La pièce rotative 5 présente une symétrie par rapport à un plan médian comprenant l'axe de rotation horizontal A, ce plan médian étant vertical dans une configuration à plat où la plateforme 30 est horizontale.

La pièce rotative 5 présente une forme générale en « U » et présente une encoche 50 ouverte sur le haut et formant un logement de réception de la poutre centrale 32.

La pièce rotative 5 présente également une fente 51 traversante présentant une forme en arc de cercle centré sur l'axe de rotation horizontal A, et de secteur angulaire compris entre 120° et 180°, notamment entre 150 et 170°. Le plan médian de symétrie précité s'étend donc radialement par rapport à la fente 51 en arc de cercle.

Cette fente 51 s'étendant en-dessous de l'encoche 50 et remontant sur les côtés de part et d'autre de cette encoche 50. Ainsi, l'encoche 50 se situe à l'intérieur du cercle fictif inscrit centré sur l'axe de rotation horizontal A et suivant la fente 51.

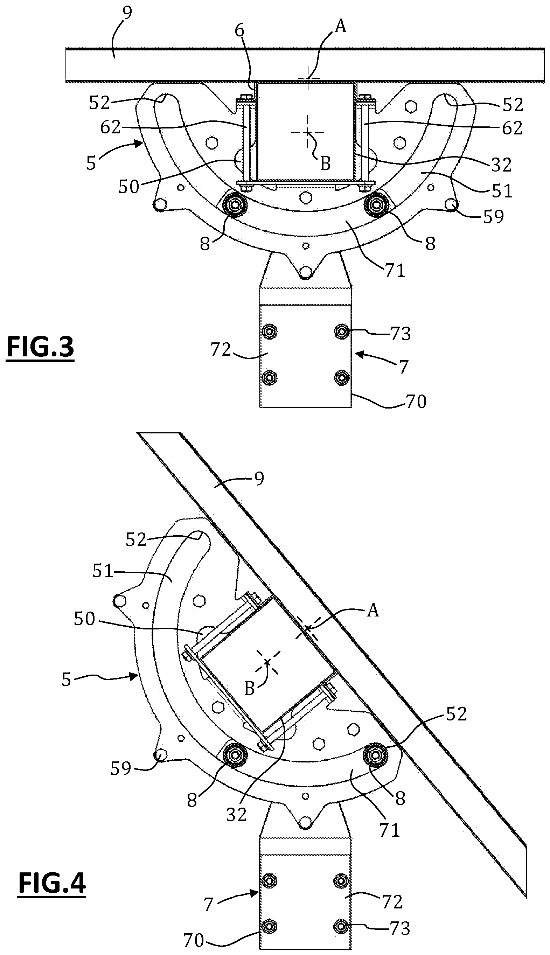

En référence à la figure 3, la fente 51 présente deux terminaisons 52 opposées, formant des butées d'arrêt pour les organes de roulement 8, ces terminaisons 52 étant localisées verticalement sensiblement au même niveau que l'entrée supérieure de l'encoche 50 dans une configuration dite à plat où la plateforme est horizontale.

La poutre centrale 32 présente une hauteur supérieure à la profondeur de l'encoche 50, de sorte que cette poutre centrale 32 dépasse vers le haut de l'encoche 50, autrement dit dépasse de son entrée supérieure. Ainsi, la poutre centrale 32 présente une face supérieure 33 hors de l'encoche 50, et les terminaisons 52 de la fente 51 sont donc localisées verticalement en-dessous de cette face supérieure 33 de la poutre centrale 32 dans la configuration à plat.

La pièce rotative 5 présente deux bords supérieurs 53 plats disposés de part et d'autre de l'encoche 50 et situés au-dessus des terminaisons 52 respectives de la fente 51. Ces bords supérieurs 53 sont horizontaux et sont localisés verticalement au-dessus de l'entrée supérieure de l'encoche 50 dans la configuration à plat.

La pièce rotative 5 présente, de chaque côté de l'encoche 50, des pattes supérieures 54 s'étendant horizontalement dans la configuration à plat, et faisant saillie à droite et à gauche de la ou des plaques métalliques. Les bords supérieurs 53 sont localisés verticalement au-dessus de ses pattes supérieures 54 dans la configuration à plat. Ces pattes supérieures 54 sont chacune percées d'un trou.

La pièce rotative 5 présente, dans le fond de l'encoche 50, deux pattes inférieures 55 s'étendant horizontalement dans la configuration à plat, et faisant saillie à droite et à gauche de la ou des plaques métalliques. Ces pattes inférieures 55 sont chacune percées de deux trous alignés sur les trous des pattes supérieures 54. La poutre centrale 32 vient reposer en appui contre ces pattes inférieures 55.

L'encoche 50 présente au moins une partie sensiblement aussi large que la poutre centrale 32, afin de bloquer latéralement la poutre centrale 32 à l'intérieur de l'encoche 50.

L'étrier 6 ferme l'encoche 50 de la pièce rotative 5 et vient se fixer sur cette pièce rotative 5 pour serrer la poutre centrale 32 dans cette encoche 50.

L'étrier 6 présente une semelle 60 centrale qui épouse la partie supérieure de la poutre centrale 32 dépassant de l'encoche 50, cette semelle 60 venant ainsi en appui contre la face supérieure 33 de la poutre centrale 32.

L'étrier 6 présente également deux ailes 61 plates, s'étendant de part et d'autre de la semelle 60, ces ailes 61 venant en appui plan contre les pattes supérieures 54 de la pièce rotative 5. Ces ailes 61 sont chacune percées de deux trous alignés sur les trous des pattes supérieures 54.

L'étrier 6 est serré contre la poutre centrale 32 et fixé sur la pièce rotative 5 au moyen de quatre ensembles vis/écrou 62 qui traversent les trous respectifs des ailes 61, des pattes supérieures 54 et des pattes inférieures 55.

Comme visible sur les figures 3 et 4, la semelle 60 définit une surface d'appui supérieure sur laquelle repose la plateforme 30 et les bords supérieurs 53 de la pièce rotative 5 sont sensiblement coplanaires avec la surface d'appui supérieure de la semelle 60 de l'étrier 6, de sorte que la plateforme 30 repose à la fois sur cette surface d'appui supérieure et sur ces bords supérieurs 53.

Comme illustré sur la figure 3, l'encoche 50 et la fente 51 sont conformées pour que l'axe de rotation horizontal A soit situé au-dessus de l'axe central B de la poutre centrale 32, voire même soit situé au-dessus de la poutre centrale 32 au niveau de la plateforme 30, et préférentiellement pour que l'axe de rotation horizontal A passe par le centre de gravité G de l'ensemble plateforme 30 / panneaux photovoltaïques 9.

L'embase 7 est composée de deux plaques 70 métalliques pliées et formant des éléments latéraux encadrant la pièce rotative 5.

Chaque plaque 70 comprend une partie supérieure 71 percée de deux trous pour la fixation de deux organes de roulement 8. En situation, les parties supérieures 71 des deux plaques 70 sont disposés de part et d'autre de la fente 54 de la pièce rotative 5, et les organes de roulement 8 sont fixés sur ces parties supérieures 71, entre ces parties supérieures 71 en vis-à-vis. Plus précisément, les organes de roulement 8 sont fixés par boulonnage au moyen d'ensembles vis/écrou 80 traversant à la fois les trous alignés des parties supérieures 71 et les organes de roulement 8 annulaires.

Ainsi, les organes de roulement 8 sont montés roulant dans la fente 51 et sont intercalés entre ces parties supérieures 71 qui les maintiennent en place dans la fente 51. Ainsi, lors du pivotement de la plateforme 30, la pièce rotative 5 pivote avec la poutre centrale 32, ce pivotement de la pièce rotative 5 par rapport à l'embase 7 fixe étant permis et guidé par le contact roulant des organes de roulement 8 à l'intérieur de la fente 51 de la pièce rotative 5.

Chaque plaque 70 comprend une partie inférieure 72 également percé de trous pour une fixation par boulonnage, au moyen d'ensembles vis/écrou 73, sur l'extrémité supérieure du pylône 20 correspondant. De préférence, la partie inférieure 72 présente des séries de plusieurs trous alignés verticalement, afin d'adapter la position verticale du palier 4 sur le pylône 20 correspondant, dans un souci d'établir l'horizontalité de la poutre centrale 32 et donc de la plateforme 30.

Il est également à noter que le système de support suiveur conforme à l'invention est équipé d'un système d'entraînement (non illustré) en rotation de la poutre centrale 32, afin d'assurer la mise en rotation de la plateforme 30 selon l'axe de rotation horizontal A. Ce système d'entraînement est couplé et commandé par un actionneur, par exemple du type vérin (électrique, pneumatique ou hydraulique) ou moteur électrique (par exemple moteur rotatif). Le système d'entraînement forme un système mécanique de transmission du mouvement en sortie de l'actionneur (mouvement rotatif pour un moteur rotatif, ou mouvement linéaire pour un vérin) en un mouvement de rotation de la poutre centrale 32. Ce système d'entraînement peut être, à titre d'exemple non limitatif, un système à parallélogramme déformable, un système de renvoi par poulie, un système à pignon, un système à chaîne, un système à courroie, un système à crabot, un système avec arbre de transmission, un système à bielle, etc.

Il est envisageable que l'actionneur soit propre au système de support suiveur, ou bien soit partagé entre plusieurs systèmes de support suiveur. Dans le cas où l'actionneur est partagé, les poutres centrales 32 des différents systèmes de support suiveur sont couplées en rotation, pour une rotation synchrone sous l'effet de l'actionneur commun.

Bien entendu l'exemple de mise en oeuvre évoqué ci-dessus ne présente aucun caractère limitatif et d'autres améliorations et détails peuvent être apportés au système de support suiveur selon l'invention, sans pour autant sortir du cadre de l'invention où d'autres type de structure fixe ou de plateforme peuvent par exemple être réalisées.

## Revendications

1. Système de support (1) suiveur mono-axe pour au moins un capteur solaire (9), notamment du type panneau photovoltaïque, ledit système de support (1) comprenant :
- une structure fixe (2) d'ancrage au sol ; et
- une plateforme (30) propre à supporter le au moins un capteur solaire (9), ladite plateforme (30) étant fixée sur au moins une poutre centrale (32) horizontale montée à rotation sur la structure fixe (2) selon un axe de rotation horizontal (A) à l'intérieur d'au moins un palier (4) fixé sur la structure fixe (2) ;
ledit système de support (1) étant **caractérisé en ce que** le au moins un palier (4) comprend :
- une pièce rotative (5) présentant, d'une part, un logement (50) de réception de la poutre centrale (32) et, d'autre part, un rail de guidage (51) présentant une forme en arc de cercle centré sur ledit axe de rotation horizontal (A), ledit rail de guidage (51) s'étendant en-dessous dudit logement (50) ; et
- une embase (7) maintenue sur la structure fixe (2) et sur laquelle sont fixés des organes de roulement (8) montés roulant dans le rail de guidage (51) de la pièce rotative (5).

2. Système de support (1) selon la revendication 1, dans lequel le logement (50) est formé d'une encoche ouverte sur le haut et fermé par un étrier (6) fixé sur la pièce rotative (5), ledit étrier (6) serrant la poutre centrale (32) dans ladite encoche.

3. Système de support (1) selon la revendication 2, dans lequel l'étrier (6) présente une surface d'appui supérieure (60) sur laquelle repose la plateforme (30).

4. Système de support (1) selon l'une quelconque des revendications précédentes, dans lequel le rail de guidage (51) est constitué d'une fente traversante dans la pièce rotative (5), les organes de roulement (8) étant montés roulant dans ladite fente.

5. Système de support (1) selon la revendication 4, dans lequel l'embase (7) comprend deux éléments latéraux (70) disposés de part et d'autre de la fente (51) prévue dans la pièce rotative (5), les organes de roulement (8) étant fixés sur lesdits éléments latéraux (70) et intercalés entre ces éléments latéraux (70) qui les maintiennent en place dans ladite fente (51).

6. Système de support (1) selon l'une quelconque des revendications précédentes, dans lequel la pièce rotative (5) est composée d'au moins une platine mince dans laquelle sont prévus le logement (50) et le rail de guidage (51).

7. Système de support (1) selon l'une quelconque des revendications précédentes, dans lequel le rail de guidage (51) présente une forme en arc de cercle de secteur angulaire inférieur ou égal à 220°, de préférence entre 90° et 180° et encore de préférence entre 120° et 170°.

8. Système de support (1) selon l'une quelconque des revendications précédentes, dans lequel la poutre centrale (32) s'étend selon un axe central (B), et dans lequel le logement (50) et le rail de guidage (51) sont conformés pour que l'axe de rotation horizontal (A) soit situé au-dessus de l'axe central (B) de ladite poutre centrale (32).

9. Système de support (1) selon la revendication 8, dans lequel le logement (50) et le rail de guidage (51) sont conformés pour que l'axe de rotation horizontal (A) soit situé au-dessus de la poutre centrale (32), au niveau de la plateforme (30).

10. Système de support (1) selon l'une quelconque des revendications précédentes, dans lequel les organes de roulement (8) sont du type roulement à billes, roulement à aiguilles ou galet de roulement, notamment galet cylindrique.

11. Système de support (1) selon l'une quelconque des revendications précédentes, comprenant en outre un système d'entraînement en rotation de la poutre centrale (32), ledit système d'entraînement étant couplé à un actionneur afin de piloter la mise en rotation de la plateforme (30) selon l'axe de rotation horizontal (A).

## Patentansprüche

1. Einachsiges Folgeelement-Trägersystem (1) für mindestens einen Solarkollektor (9), insbesondere vom Typ photovoltaische Tafel, das Trägersystem (1) umfassend:
- eine feste Struktur (2) für die Verankerung am Boden; und
- eine Plattform (30), die zum Tragen des mindestens einen Solarkollektors (9) geeignet ist, wobei die Plattform (30) auf mindestens einem zentralen horizontalen Balken (32) befestigt ist, der entlang einer horizontalen Drehachse (A) drehbar auf der festen Struktur (2) im Inneren von mindestens einem Lager (4) montiert ist, das auf der festen Struktur (2) befestigt ist;
das Trägersystem (1) ist **dadurch gekennzeichnet, dass** das mindestens eine Lager (4) umfasst:
- ein Drehelement (5) das einerseits eine Aufnahmekammer (50) des zentralen Balkens (32) und andererseits eine Führungsschiene (51) aufweist, die eine kreisbogenförmige Ausgestaltung aufweist, die sich im Zentrum dieser drehbaren horizontalen Achse (A) befindet, wobei sich die Führungsschiene (51) unterhalb der Kammer (50) befindet; und
- eine Basis (7), die auf der festen Struktur (2) gehaltert ist, und auf der Laufelemente (8) befestigt sind, die auf der Führungsschiene (51) des Drehelements (5) rollend montiert sind.

2. Trägersystem (1) nach dem Anspruch 1, in welchem die Kammer (50) aus einer Vertiefung gebildet ist, die nach oben offen und durch einen Bügel (6), der auf dem Drehelement (5) befestigt ist, geschlossen ist, wobei der Bügel (6) den zentralen Balken (32) in dieser Vertiefung festklemmt.

3. Trägersystem (1) nach dem Anspruch 2, in welchem der Bügel (6) eine obere Stützfläche (60) aufweist, auf welcher die Plattform (30) aufliegt.

4. Trägersystem (1), nach einem der vorhergehenden Ansprüche, in welchem die Führungsschiene (51) aus einem durchgehenden Schlitz in dem Drehelement (5) besteht, wobei die Laufelemente (8) rollend in diesem Schlitz montiert sind.

5. Trägersystem (1) nach Anspruch 4, in dem die Basis (7) zwei Seitenelemente (70) umfasst, welche beiderseits des Schlitzes (51) angeordnet sind, der in dem Drehelement (5) vorgesehen ist, wobei die Laufelemente (8) auf diesen Seitenelementen (70) befestigt sind und sich zwischen diesen Seitenelementen (70) erstrecken, welche die Laufelemente (8) in diesem Schlitz (51) vor dem Verrutschen bewahren.

6. Trägersystem (1), nach einem der vorhergehenden Ansprüche, in welchem das Drehelement (5) aus mindestens einer dünnen Platte besteht, in welcher die Kammer (50) und die Führungsschiene (51) vorgesehen sind.

7. Trägersystem (1) nach einem der vorhergehenden Ansprüche, in welchem die Führungsschiene (51) eine kreisbogenförmige Ausführung des gewinkelten Bereichs aufweist, die geringer oder gleich 220°, bevorzugt zwischen 90° und 180° und weiter bevorzugt zwischen 120° und 170° ist.

8. Trägersystem (1), nach einem der vorhergehenden Ansprüche, in welchem sich der zentrale Balken (32) entlang einer zentralen Achse (B) erstreckt, und in welcher die Kammer (50) und die Führungsschiene (51) so ausgebildet sind, dass sich die horizontale Drehachse (A) oberhalb von der zentralen Achse (B) des zentralen Balkens (32) befindet.

9. Trägersystem (1), nach Anspruch 8, in welchem die Kammer (50) und die Führungsschiene (51) so ausgebildet sind, dass sich die horizontale Drehachse (A) oberhalb von dem zentralen Balken (32) in Höhe der Plattform (30) befindet.

10. Trägersystem (1), nach einem der vorhergehenden Ansprüche, in welchem die Laufelemente (8) vom Typ Kugellager, Nadellager oder Laufrolle, insbesondere zylindrische Rolle, sind.

11. Trägersystem (1) nach einem der vorhergehenden Ansprüche, umfassend außerdem ein Drehantriebssystem des zentralen Balkens (32), wobei das Antriebssystem an einen Aktuator gekoppelt ist, um das Drehen der Plattform (30) entlang der horizontalen Drehachse (A) zu steuern.

## Claims

1. A single-axis tracker support system (1) for at least one solar collector (9), in particular of the photovoltaic panel type, said support system (1) comprising:
a fixed structure (2) for anchorage to a ground; and
a platform (30) configured to support the at least one solar collector (9), said platform (30) being fastened on at least one horizontal central beam (32) rotatably mounted on the fixed structure (2) around a horizontal axis of rotation (A) inside at least one bearing (4) fastened on the fixed structure (2);
said support system (1) being **characterized in that** the at least one bearing (4) comprises
a rotatable part (5) including, on the one hand, a housing (50) for receiving the horizontal central beam (32) and, on the other hand, a guide rail (51) presenting a circular-arc shape centered on said horizontal axis of rotation (A), said guide rail (51) extending below said housing (50); and
a base (7) held on the fixed structure (2) and onto which are fastened rolling members (8), said rolling members (8) being mounted so as to roll in the guide rail (51) of the rotatable part (5).

2. The single-axis tracker support system (1) according to claim 1, wherein the housing (50) is formed by a notch open at the top and closed by a bracket (6) fastened on the rotatable part (5), said bracket (6) clamping the horizontal central beam (32) in said notch.

3. The single-axis tracker support system (1) according to claim 2, wherein the bracket (6) presents an upper bearing surface (60) onto which the platform (30) rests.

4. The single-axis tracker support system (1) according to one of the preceding claims, wherein the guide rail (51) is constituted of a through slot provided in the rotatable part (5), the rolling members (8) being mounted so as to roll in said through slot.

5. The single-axis tracker support system (1) according to claim 4, wherein the base (7) comprises two lateral elements (70) arranged on either side of the through slot (51) provided in the rotatable part (5), the rolling members (8) being fastened on said lateral elements (70) and interposed between these lateral elements (70) which hold them in place in said through slot (51).

6. The single-axis tracker support system (1) according to one of the preceding claims, wherein the rotatable part (5) is composed of at least one thin plate in which the housing (50) and the guide rail (51) are provided.

7. The single-axis tracker support system (1) according to one of the preceding claims, wherein the guide rail (51) presents a circular-arc shape of an angular sector smaller than or equal to 220°, preferably between 90° and 180° and particularly preferred between 120° and 170°.

8. The single-axis tracker support system (1) according to one of the preceding claims, wherein the horizontal central beam (32) extends along a central axis (B), and wherein the housing (50) and the guide rail (51) are configured so that the horizontal axis of rotation (A) is located above the central axis (B) of said horizontal central beam (32).

9. The single-axis tracker support system (1) according to claim 8, wherein the housing (50) and the guide rail (51) are shaped so that the horizontal axis of rotation (A) is located above the horizontal central beam (32), at the level of the platform (30).

10. The single-axis tracker support system (1) according to one of the preceding claims, wherein the rolling members (8) are of the ball bearing type, needle bearing type or roller bearing type, in particular cylindrical roller.

11. The single-axis tracker support system (1) according to one of the preceding claims, further comprising a driving system configured for driving in rotation the horizontal central beam (32), said driving system being coupled to an actuator in order to drive the rotating of the platform (30) around the horizontal axis of rotation (A).
